# EUROPÄISCHE PATENTSCHRIFT

(11) **EP 0 975 495 B1**
(45) Veröffentlichungstag und Bekanntmachung des Hinweises auf die Patenterteilung: **16.06.2004**
(21) Anmeldenummer: 98966782.9
(22) Anmeldetag: 18.12.1998
(51) Int. Cl.: B60S 1/40

(54) **VERBINDUNGSELEMENT FÜR DIE VERBINDUNG EINES SCHEIBENWISCHERBLATTES MIT EINEM WISCHERARMHAKEN**
CONNECTING ELEMENT FOR CONNECTING A WINDSCREEN WIPER BLADE TO A WIPER ARM HOOK
ELEMENT DE RACCORDEMENT POUR RELIER UNE RACLETTE D'ESSUIE-GLACE A UN CROCHET DE BRAS D'ESSUIE-GLACE

(30) Priorität: 30.12.1997 DE 19758245
(43) Veröffentlichungstag der Anmeldung: 02.02.2000
(73) Patentinhaber: ROBERT BOSCH GMBH, 70442 Stuttgart (DE)
(72) Erfinder: WESTERMANN, Klaus-Juergen, D-76307 Karlsbad (DE); MAYER, Juergen, D-76571 Gaggenau (DE); WIJNANTS, Peter, B-3111 Wezemool (BE); ROEKENS, Jurgens, B-1820 Steenokkerseel (BE)
(74) Vertreter: Hörschler, Wolfram Johannes
(86) Internationale Anmeldenummer: PCT/DE1998/003720
(87) Internationale Veröffentlichungsnummer: WO 1999/035015

(56) Entgegenhaltungen:
- EP-A- 0 655 373
- FR-A- 2 482 914
- US-A- 5 611 103

## Beschreibung

### Technisches Gebiet

Die Erfindung betrifft ein Verbindungselement für die Verbindung eines Scheibenwischerblattes mit einem Wischerarmhaken, wobei das Verbindungselement für verschiedene Hakenbreiten und Hakenweiten verwendbar ist. Ein derartiges Verbindungselement ist im Oberbegriff des Anspruchs 1 definiert und jenem nach US-A-5 611 103 gattungsgemäß ausgebildet.

### Stand der Technik

Aus der DE-U-85 09 539 ist ein Verbindungszwischenelement für die Verbindung eines Scheibenwischerblattes mit einem Antriebshebel bekannt, welches für drei verschiedene Hakenbreiten bzw. Hakenweiten verwendet und gleichzeitig in seiner Lage am Haken fixiert werden kann. Dazu ist das Verbindungszwischenelement zweigeteilt, so daß der Haken vollständig eingeschlossen ist.

Aus der FR-A1-2 533 517 ist ein Verbindungsstück bekannt, welches an zwei in Breite und Weite unterschiedlichen Haken befestigt werden kann.

Darüber hinaus sind Aufnahmen für Wischerarme ohne Haken vorgesehen. Nachteilig ist hier, dass ein relativ voluminöses Bauteil erforderlich ist.

In der FR-A1 2 487 757 ist ein Verbindungselement dargestellt, welches an schmalen, weiten haken und an breiten, weniger weiten Haken befestigbar ist.

In der FR-A1 2 692 537 ist noch ein anderes Verbindungselement dargestellt, welches einen breiten, weiten Haken oder einen schmaleren und weniger weiten Haken aufnehmen kann und an diesem verrastet wird.

Auch die US-A-5,084,933 zeigt ein Verbindungselement zur Befestigung an einem Wischerarm, wobei hier jedoch drei verschiedene Befestigungsmethoden, nämlich Haken, Bajonettverbindung oder Stiftbefestigung gezeigt werden.

US 5,611,103 bezieht sich auf ein Verbindungselement für die Verbindung eines Scheibenwischerblattes mit Wischerarmhaken unterschiedlicher Wischerarmhakenbreite sowie Wischerarmhakenweite, welches mehrere verschiedene Teilkontaktflächen aufweist, die zur Befestigung von Wischerarmhaken mit verschiedenen Abmessungen dienen. Das Verbindungselement weist zwei Gehäuseseitenwände auf und ein dazwischen angeordnetes Mittelstück.

### Darstellung der Erfindung

Durch die Winkeldrehung der beiden Montageachsen wird ein kompaktes Verbindungselement mit allen im Anspruch 1 enthaltenen Merkmalen für verschiedene Ausführungen von Wischerarmhaken geschaffen, welche eine unterschiedliche Breite, aber dieselbe Hakenweite aufweisen.

Dadurch, daß das Verbindungselement an verschiedene Wischerarmhaken passt, kann das Wischblatt mit dem Verbindungselement versehen werden, wodurch eine Adapterbox für mehrere Verbindungselemente entfallen kann.

Alle Wischerarmhaken werden seitlich durch die Gehäuseseitenwände geführt, wobei gemäß einer Weiterbildung die schmaleren Wischerarmhaken durch Auflageflächen auf den Innenseiten der Seitenwände geführt sind.

Bei einer anderen Weiterbildung geschieht die Verriegelung in Längsrichtung mittels eines Filmgelenks, welches sich hinter einer Rastnase auf der gegenüberliegenden Seite verriegeln läßt.

Weitere vorteilhafte Ausgestaltungen sind den Unteransprüchen zu entnehmen.

### Zeichnung

Ein erfindungsgemäßes Verbindungselement ist in der Zeichnung dargestellt.
Es zeigt die
- Fig.1: ein Verbindungselement in Ansicht von unten, die
- Fig.2: ein Verbindungselement im Längsschnitt, die
- Fig.3: ein Verbindungselement in Draufsicht, die
- Fig.4: eine Ansicht auf die Stirnseite des Verbindungselementes aus Figur 2, die
- Fig.5: ein in ein Wischerblatt eingefügtes Verbindungselement in einer ersten Lage, die
- Fig.6: das Verbindungselement in einem breiten, weiten Wischerarmhaken im Längsschnitt, die
- Fig.7: einen Querschnitt mit Teilansicht der Fig.6, die
- Fig.8: die Befestigung des Verbindungselementes in einem breiten, weniger weiten Wischerarmhaken, die
- Fig.9: die Befestigung des Verbindungselementes gemäß einer zweiten Montageachse in einem Wischerarmhaken geringer Breite und geringer Weite und die
- Fig.10: Ausgleichsflächen innerhalb des Verbindungselementes.

### Ausführungsbeispiele

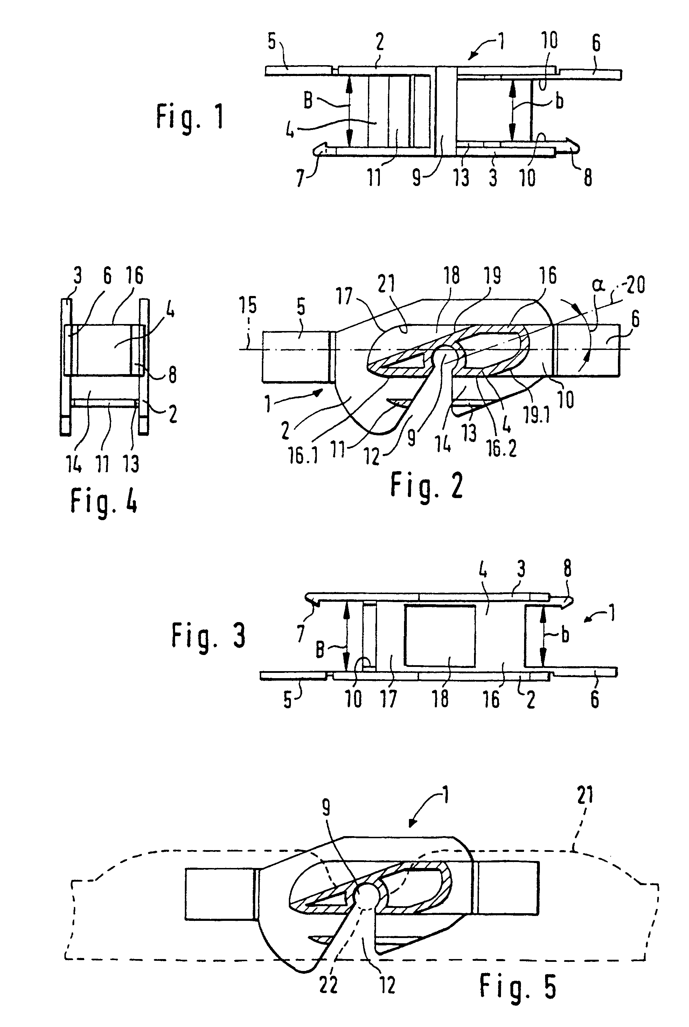

In Figur 1 ist ein Verbindungselement 1 in einer Ansicht von unten dargestellt. Das Verbindungselement 1 weist zwei einander gegenüberliegende Gehäusewände 2, 3 auf, welche über ein Mittelteil 4 miteinander verbunden sind. Die Gehäuseseitenwände 2, 3 weisen an ihren Enden Verriegelungsmittel auf, die aus einem Filmgelenk 5, 6 auf der Gehäuseseitenwand 2 und Rastnasen 7, 8 auf der gegenüberliegenden Gehäusewand 3 gebildet sind. Die Gehäuseseitenwände 2, 3 erstrecken sich über eine zentrale Klemmnut 9 zur Aufnahme einer Achse eines Wischerblattes seitlich von dieser weg, wobei durch eine zusätzliche Materialauflage 10 eine Verringerung des Abstandes zwischen den Gehäuseseitenwänden 2, 3 von B auf b vorhanden ist. Weiterhin findet man einen die Gehäuseseitenwände 2, 3 verbindenden Steg 11 auf der einen Seite der Klemmnut 9 und Rippen 13 entlang der Gehäuseseitenwand 2, 3 auf der anderen Seite der Klemmnut 9.

In Figur 2 findet man ebenfalls diesen Steg 11 im unteren Teil, d.h. unterhalb der Klemmnut 9 für die Aufnahme der Achse eines Wischerblattes. Der Steg 11 erstreckt sich jedoch nur bis zu einem Ausschnitt 12 in der Gehäuseseitenwand 2. Auf der anderen Seite des Ausschnitts 12 sind lediglich Rippen 13 vorgesehen. Die Auflage 10 geht einerseits in das Filmscharnier 6 über, andererseits weist sie eine Kontur gemäß der Innenkontur eines Hakens mit der Weite W auf.

Die der Klemmnut 9 zugewandten Seite des Steges 11 und die Rippen 13 begrenzen zusammen mit dem Mittelteil 4 einen Führungskanal 14, der parallel zu einer Längsachse bzw. Montageachse 15 des Verbindungselements 1 ist. Eine weitere Anschlagfläche 16 auf der Oberseite des Mittelteils 4 sorgt zusammen mit einer Führungsrippe 17 für eine weitere Führungsmöglichkeit. Zwischen der Führungsrippe 17 und der Auflagefläche 16 ist eine Öffnung 18 angeordnet, in der das Mittelteil 4 wiederum eine Führungsfläche 19 aufweist, die auf einer zur Montageachse 15 um einen Winkel a versetzt angeordneten zweiten Montageachse 20 parallel versetzt angeordnet ist. Diese Montagefläche 19 wirkt mit einer Innenfläche 21 der Verbindungsrippe 17 zusammen, die dementsprechend ebenfalls parallel zur Montageachse 20 ausgerichtet ist.

In Figur 3 sind die verschiedenen Funktionselemente als Draufsicht auf das Verbindungselement 1 dargestellt. Man erkennt die Mittelöffnung 18, die zwischen der Auflagefläche 16 und der Verbindungsrippe 17 auf der Oberseite des Mittelteils 4 angeordnet ist. Die Gehäuseseitenwand 2 ist mit Flimscharnieren 5, 6 versehen, wobei das Filmscharnier 6 an einer Auflage 10 zur Verringerung der Weite zwischen der Gehäuseseitenwand 2 und der Gehäuseseitenwand 3 angeordnet ist. Die Auflage 10 erstreckt sich von dem Filmscharnier 6 bis über die Verbindungsrippe 17 hin, wobei die Mittelöffnung 18 dieselbe Weite wie der Abstand b zwischen der Auflage 10 der Gehäuseseitenwände 2, 3 aufweist. Die Gehäuseseitenwand 3 weist an jeder Endseite eine Rastnase 7, 8 auf, welche mit dem entsprechenden Filmscharnier 5 bzw. 6 zusammenwirkt.

In Figur 4 ist eine Ansicht auf die das Filmscharnier 6 bzw. die Rastnase 8 aufweisenden Seite gezeigt. Zwischen den Gehäuseseitenwänden 2, 3 ist das Mittelteil 4 angeordnet, auf dessen Oberseite die Auflagefläche 16 angeordnet ist. Im unteren Bereich sind der Verbindungssteg 11 und die Führungsrippe 13 dargestellt, die zusammen mit dem Mittelteil 4 den Führungskanal 14 einschließen.

In Figur 5 ist die Lage des Verbindungselementes 1 an einem Wischarm 21 gezeigt. Das Verbindungselement 1 umfaßt mit seiner Klemmnut 9 eine mit dem Wischerblatt 21 verbundene Achse 22, wobei das Verbindungselement 1 zunächst mit dem Ausschnitt 12 auf die Achse 22 gesteckt wird und dann die Achse durch leichten Druck in die Klemmnut 9 eingeklipst wird.

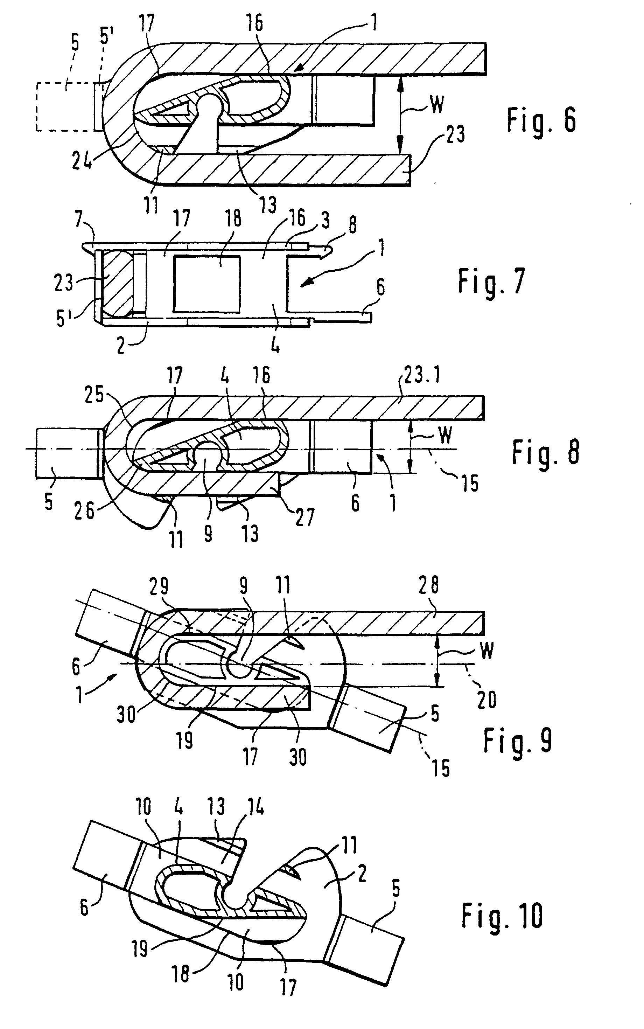

In Figur 6 ist die Anordnung eines Verbindungselementes 1 in einem breiten Wischerarmhaken 23 mit einer großen Hakenweite W dargestellt. Das Verbindungselement 1 liegt mit seiner Auflagefläche 16, der Führungsrippe 17 und dem Steg 11 in der Krümmung 24 des Wischerarmhakens 23. Die Rippe 13 sorgt für eine weitere Führung. Durch Umklappen des Filmscharniers 5 in eine Position 5' ist das Verbindungselement 1 gegen Herausfallen gesichert.

In Figur 7 ist die Verriegelung des Verbindungselements 1 um den Wischerarmhaken 23 herum mit umgeklappten Filmscharnier 5' dargestellt, wobei das Filmscharnier 5' unter die Rastnase 7 eingerastet ist. Im übrigen finden man die aus Figur 3 bekannten Funktionselemente wieder, auf die im übrigen verwiesen wird.

In Figur 8 ist die Unterbringung des Verbindungselementes 1 in einem Wischerarmhaken 24 derselben Breite wie der in Figur 6 und 7 dargestellte Wischerarmhaken 23 gezeigt, wobei im Unterschied zu der Figur 6 der Wischerarmhaken 24 eine verringerte Hakenweite w aufweist. Man erkennt wiederum die Anlage der Anlagefläche 16 und der Verbindungsrippe 17 an dem Wischerarmhaken 24. Im Gegensatz zu der in Figur 6 dargestellten Anordnung schmiegt sich die Verbindungsrippe 17 jedoch nicht an die Krümmung 25 des Wischerarmhakens 24 an, sondern ist dazu beabstandet. Die Begrenzung der Axialverschiebung innerhalb des Wischerarmhakens erfolgt durch die Anlage des Vorderteils 26 des Mittelstücks 4 an der Innenwand des Hakens 25. Das umgebogene Ende 27 des Wischerarmhakens 25 ist durch den Kanal 14 geführt, der durch das Mittelstück 4, den Steg 11 und die Rippen 13 begrenzt wird. Dadurch ist die Klemmnut 9 von dem Ende 27 verschlossen, so daß zusätzlich ein Herausfallen des Wischerblattes aus dem Mittelstück verhindert wird. Um die axiale Lage des Verbindungselementes 1 in dem Wischerarmhaken 24 zu fixieren, kann das Filmscharnier 5 wiederum um den Haken 24 geklappt und verriegelt werden.

In den Figuren 9 und 10 ist eine Einbauvariante in einem schmaleren Wischerarmhaken 28 ebenfalls mit der Hakenweite w gezeigt. Das Verbindungselement 1 wird in auf den Kopf gestellter und gespiegelter Lage in den Wischerarmhaken 28 eingeschoben, wodurch eine bezüglich des Wischerarmhakens 28 diagonale Ausrichtung der Filmscharniere 5 bzw. 6 erfolgt. Dabei erfolgt der Einbau in den Wischerarmhaken 28 entlang der Montageachse 20. Das Mittelstück 4 kommt nun mit der Führungsfläche 19 und einer weiteren Anlagefläche 29 zur Anlage an die Innenwand 30 des Hakens 28, wobei ein Ende 30 des Hakens 28 durch die Mittelöffnung 18 zwischen der Auflagefläche 19 und der Verbindungsrippe 17 geführt ist. Zusätzlich zu der Auflagefläche 29 kommt auch der Steg 11 zur Anlage an den Wischerarmhaken 28. Um das Verbindungselement 1 in seiner Lage zu fixieren, wird das Filmscharnier 6 umgeklappt und verriegelt. Die Klemmnut 9 ist durch die umgedrehte Anordnung des Verbindungselementes 1 nach oben geöffnet.

In Figur 10 sind die Ausgleichsflächen für die verringerte Breite des Wischerarmhakens nochmals dargestellt. Es handelt sich hier um die Rippe 13 und um die Auflagefläche 10, welche sich auch zwischen der Verbindungsrippe 17 und der Auflagefläche 19 im Bereich der Mittelöffnung 18 wiederfindet. Diese auf der Gehäuseseitenwand 2 angeordneten, über diese vorstehenden Bereiche 10, 13 sorgen für die seitliche Führung des eine geringere Breite aufweisenden, in Figur 9 dargestellten Wischerarmhakens 28. Dabei ragt ein Ende 30 des Wischerarmhakens 28 durch die Mittelöffnung 18.

Mit dem Adapter lassen sich sowohl 8 x 3 / 9 x 3 / 9 x 4 -Haken abdecken.

Das Verbindungselement ist für Wischerarmhaken mit oder ohne Rastloch verwendbar, da die Lagearretierung durch das Filmscharnier erfolgt.

## Patentansprüche

1. Verbindungselement (1) für die Verbindung eines Scheibenwischerblattes (21) mit Wischerarmhaken (23, 23.1, 28) unterschiedlicher Wischerarmhakenbreite (B, b) und Wischerarmhakenweite (W, w), das mehrere verschiedene, wenigstens Teilkontaktflächen (11, 16, 17, 19, 13, 21, 29) für Wischerarmhaken (23, 23.1, 28) mit verschiedenen Abmessungen enthält, aufweisend zwei Gehäuseseitenwände (2, 3) und ein dazwischenliegends *Mittelteil* (4),wobei diese Teilkontaktflächen (11, 16, 17, 19, 13, 21, 29) zum Ausgleich unterschiedlicher Wischerarmhakenbreiten (B, b) an einer Gehäuseseitenwand (2, 3) und zum Ausgleich unterschiedlicher Wischerarmhakenweiten (W, w) auf dem *Mittelteil* (4) angeordnet sind, **dadurch gekennzeichnet, daß** das Mittelteil (4) *in Richtung einer der beiden Montageachsen (15, 20) orientierte Auflageflächen (16, 16.1, 16.2) sowie entlang einer Montageachse (20) schräg versetzt zur anderen Montageachse (15) angeordnete Teilkontaktflächen (19, 19.1, 21) aufweist, die* eine Aufnahme von mindestens zwei unterschiedlichen Wischerarmhaken (23, 23.1, 28) entlang zueinander winklig angeordneten Montageachsen (15, 20) ermöglichen.

2. Verbindungselement nach Anspruch 1, **dadurch gekennzeichnet, dass** eine Teilkontaktfläche als Auflage (10) auf der Gehäusewand (2, 3) ausgebildet ist und sich höchstens über die kleinste Wischerarmhakenweite (w) in etwa parallel zur Wischerarmachse (15) erstreckt.

3. Verbindungselement nach einem der Ansprüche 1 oder 2, **dadurch gekennzeichnet, dass** die Teilkontaktflächen (19, 21) mit der Auflage (10) einen sich in Richtung einer der bieden Montageachsen (15, 20) erstreckenden Führungskanal mit einer Mittelöffnung (18) für ein Wischerarmhaken (18) verringerter Breite b bilden.

4. Verbindungselement nach Anspruch 1, **dadurch gekennzeichnet, dass** *die Auflageflächen*(16, 16.1, 16.2) untereinander einen Abstand (w) der kleinsten Wischerarmhakenweite (w) aufweisen.

5. Verbindungselement nach einem der Ansprüche 1 bis 4, **dadurch gekennzeichnet, dass** ein Steg (11) und/oder eine Verbindungsrippe (17) vorgesehen sind, welche in einem Abstand zu dem Mittelteil (4) angeordnet sind und mit diesem einen Führungskanal (14) begrenzen.

6. Verbindungselement nach einem der Ansprüche 1 bis 5, **dadurch gekennzeichnet, dass** an einer Gehäuseseitenwand (2) mindestens ein Filmscharnier (5, 6) angebracht ist und dass an der gegenüberliegenden Gehäusewand (3) eine Rastnase (7, 8) vorgesehen ist, die mit dem Filmscharnier (5, 6) zusammenwirkt.

7. Verbindungslelement nach einem der Ansprüche 1 bis 6,d adurch gekennzeichnet, dass das Verbindungselement entlang einer ersten Montageachse (18) entweder mit einem ersten Wischerarmhaken (23) mit einer ersten Hakenbreite (B) und einer ersten Hakenweite (W), oder mit einem zweiten Wischerarmhaken (23.1) mit derselben Hakenweite (B) aber mit einer zweiten, gegenüber der ersten Hakenweite (W) verringerten Hakenweite (w) oder entlang einer zweiten Montageachse (20) mit einem Wischerarmhaken (28) mit der zweiten Hakenweite (w) aber mit verringerter Hakenbreite (b) in Verbindung bringbar ist.

## Claims

1. Connecting element (1) for connecting a window wiper blade (21) to wiper arm hooks (23, 23.1, 28) of different wiper-arm-hook breadths (B, b) and wiper-arm-hook widths (W, w), the connecting element containing a plurality of different, at least partial contact surfaces (11, 16, 17, 19, 13, 21, 29) for wiper arm hooks (23, 23.1, 28) of various dimensions, having two housing side walls (2, 3) and a central part (4) situated in between, these partial contact surfaces (11, 16, 17, 19, 13, 21, 29) being arranged on a housing side wall (2, 3) to compensate for different wiper-arm-hook breadths (B, b) and on the central part (4) to compensate for different wiper-arm-hook widths (W, w), **characterized in that** the central part (4) has supporting surfaces (16, 16.1, 16.2) which are orientated in the direction of one of the two installation axes (15, 20), and partial contact surfaces (19, 19.1, 21) which are arranged along one installation axis (20) offset obliquely with respect to the other installation axis (15) and which permit at least two different wiper arm hooks (23, 23.1, 28) to be held along installation axes (15, 20) which are arranged at an angle to each other.

2. Connecting element according to Claim 1, **characterized in that** one partial contact surface is designed as a support (10) on the housing wall (2, 3) and extends at maximum over the smallest wiper-arm-hook width (w) approximately parallel to the wiper arm axis (15).

3. Connecting element according to either of Claims 1 and 2, **characterized in that** the partial contact surfaces (19, 21) form with the support (10) a guide channel which extends in the direction of one of the two installation axes (15, 20) and has a central opening (18) for a wiper arm hook (18) of reduced breadth (b).

4. Connecting element according to Claim 1, **characterized in that** the supporting surfaces (16, 16.1, 16.2) are at a distance (w) of the smallest wiper-arm-hook width (w) apart.

5. Connecting element according to one of Claims 1 to 4, **characterized in that** a web (11) and/or a connecting rib (17) are provided and are arranged at a distance from the central part (4) and together with the latter bound a guide channel (14).

6. Connecting element according to one of Claims 1 to 5, **characterized in that** at least one film hinge (5, 6) is fixed on a housing side wall (2), and **in that** a latching lug (7, 8) which interacts with the film hinge (5, 6) is provided on the opposite housing wall (3).

7. Connecting element according to one of Claims 1 to 6, **characterized in that** the connecting element can be brought into connection along a first installation axis (18) either with a first wiper arm hook (23) having a first hook breadth (B) and a first hook width (W), or with a second wiper arm hook (23.1) having the same hook breadth (B) but a second hook width (w) which is reduced with respect to the first hook width (W), or can be brought along a second installation axis (20) into connection with a wiper arm hook (28) having the second hook width (w) but with a reduced hook breadth (b).

## Revendications

1. Elément de liaison (1) destiné à relier une raclette d'essuie-glace (21) à des crochets de bras d'essuie-glace (23, 23.1, 28) présentant différentes largeurs de crochets de bras d'essuie-glace (B, b) et différents écartements de bras d'essuie-glace (W, w), qui comprend plusieurs surfaces de contact au moins partielles (11, 16, 17, 19, 13, 21, 29) pour des crochets de bras d'essuie-glace (23, 23.1, 28) ayant différentes dimensions, présentant deux parois latérales de boîtier (2, 3) et *une partie centrale* (4) située entre celles-ci, dans lequel ces surfaces de contact partielles (11, 16, 17, 19, 13, 21, 29) sont disposées le long d'une paroi latérale de boîtier (2, 3) pour compenser différentes largeurs de crochets de bras d'essuie-glace (B, b), et sur la *partie centrale* (4) pour compenser différents écartements de crochets de bras d'essuie-glace (W, w),
**caractérisé en ce que**
la partie centrale (4) *présente des surfaces de portée (16, 16.1, 16.2) orientées selon la direction de l'un des deux axes de montage (15, 20) ainsi que des surfaces de contact partielles (19, 19.1, 21) disposées le long d'un axe de montage (20), décalées obliquement par rapport à l'autre axe de montage (15)*, surfaces qui permettent de recevoir au moins deux crochets de bras d'essuie-glace différents (23, 23.1, 28) le long d'axes de montage (15, 20) disposés en formant un angle l'un par rapport à l'autre.

2. Elément de liaison selon la revendication 1,
**caractérisé en ce qu'**
une surface de contact partielle est constituée par une surface de portée (10) sur la paroi de boîtier (2, 3) et s'étend au maximum sur le plus petit écartement de crochet de bras d'essuie-glace (w) à peu près parallèlement à l'axe de bras d'essuie-glace (15).

3. Elément de liaison selon une des revendications 1 ou 2,
**caractérisé en ce que**
les surfaces de contact partielles (19, 21) forment avec la portée (10), un canal de guidage s'étendant selon la direction d'un des deux axes de montage (15, 20) et qui possède une ouverture centrale (18) pour un crochet de bras d'essuie-glace (18) de largeur réduite b.

4. Elément de liaison selon la revendication 1,
**caractérisé en ce que**
*les surfaces de portée* (16, 16.1, 16.2) présentent entre elles une distance (w) du plus petit écartement de crochets de bras d'essuie-glace (w).

5. Elément de liaison selon une des revendications 1 à 4,
**caractérisé en ce que**
il est prévu une barrette (11) et/ou une nervure d'assemblage (17) qui sont disposées à distance de la partie centrale (4) et délimitent un canal de guidage (14) avec cette dernière.

6. Elément de liaison selon une des revendications 1 à 5,
**caractérisé en ce que**,
sur une paroi latérale (2) du boîtier est formée au moins une charnière film (5, 6) et **en ce que**, sur la paroi (3) opposée du boîtier, est prévue un dent d'enclenchement (7, 8) qui coopère avec la charnière film (5, 6).

7. Elément de liaison selon une des revendications 1 à 6,
**caractérisé en ce que**
l'élément de liaison peut être mis en liaison, le long d'un premier axe de montage (18), soit avec un premier crochet de bras d'essuie-glace (23) présentant une première largeur de crochet (B) et un premier écartement de crochet (W), soit avec un deuxième crochet de bras d'essuie-glace (23.1) qui possède la même largeur de crochet (B) mais un deuxième écartement de crochet (w), réduit par rapport au premier écartement de crochet (W), ou, le long d'un deuxième axe de montage (20), avec un crochet de bras d'essuie-glace (28) possédant le deuxième écartement de crochet (w), mais une largeur de crochet réduite (b).
